(19) Europäisches Patentamt / European Patent Office / Office européen des brevets

(11) **EP 4 087 011 B1**

(12) **EUROPEAN PATENT SPECIFICATION**

(45) Date of publication and mention
of the grant of the patent:
**22.04.2026  Bulletin 2026/17**

(21) Application number: **21886516.0**

(22) Date of filing: **27.08.2021**

(51) International Patent Classification (IPC):
*H01M 10/42* (2006.01)     *G01N 9/08* (2006.01)

(52) Cooperative Patent Classification (CPC):
**G01N 9/02; G01N 9/08; G01N 9/10; H01M 10/052;
H01M 10/48; H01M 50/242; H01M 50/264;**
H01M 2220/30; Y02E 60/10

(86) International application number:
**PCT/KR2021/011521**

(87) International publication number:
**WO 2022/092519 (05.05.2022 Gazette 2022/18)**

(54) **BATTERY CELL JIG COMPRISING SPACER LAMINATE, APPARATUS COMPRISING SAME FOR MEASURING VOLUME OF BATTERY CELL, AND METHOD FOR MEASURING VOLUME OF BATTERY CELL USING SAME**

BATTERIEZELLENVORRICHTUNG, DIE EIN ABSTANDSLAMINAT UMFASST, GERÄT, DAS DIESELBE ZUM MESSEN DES VOLUMENS EINER BATTERIEZELLE UMFASST, UND VERFAHREN ZUM MESSEN DES VOLUMENS EINER BATTERIEZELLE UNTER VERWENDUNG DERSELBEN

GABARIT D'ÉLÉMENT DE BATTERIE COMPRENANT UN STRATIFIÉ D'ESPACEUR, APPAREIL LE COMPRENANT POUR MESURER LE VOLUME D'ÉLÉMENT DE BATTERIE, ET PROCÉDÉ DE MESURE DE VOLUME D'ÉLÉMENT DE BATTERIE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2020  KR 20200143327**

(43) Date of publication of application:
**09.11.2022  Bulletin 2022/45**

(73) Proprietor: **LG Energy Solution, Ltd.**
**Seoul 07335 (KR)**

(72) Inventors:
• **JEON, Hyung In**
**Daejeon 34122 (KR)**
• **LEE, Jong Hwa**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
| | |
|---|---|
| CN-A- 111 504 414 | JP-A- 2006 147 531 |
| KR-A- 20160 067 235 | KR-B1- 100 922 571 |
| KR-B1- 101 195 888 | KR-B1- 102 070 684 |

## Description

[Technical Field]

This application claims the benefit of priority based on Korean Patent Application No. 10-2020-0143327, filed on October 30, 2020.

The present invention relates to a battery cell jig including a spacer laminate, a battery cell volume measuring apparatus including the battery cell jig, and a battery cell volume measuring method performed by using the apparatus.

[Background Art]

Recently, secondary batteries capable of charging and discharging have been widely used as energy sources of wireless mobile devices. In addition, the secondary battery has attracted attention as an energy source of an electric vehicle, a hybrid electric vehicle, etc., which are proposed as a solution for air pollution of existing gasoline vehicles and diesel vehicles using fossil fuel. Therefore, the types of applications using the secondary battery are currently much diversified due to the advantages of the secondary battery, and it is expected that the secondary battery will be applied to many fields and products in the future.

Such secondary batteries may be classified into lithium ion batteries, lithium ion polymer batteries, lithium polymer batteries, etc., depending on the composition of the electrode and the electrolyte, and among them, the amount of use of lithium-ion polymer batteries that are less likely to leak electrolyte and are easy to manufacture is on the increase. In general, secondary batteries are classified into cylindrical batteries and prismatic batteries in which an electrode assembly is embedded in a cylindrical or rectangular metal can, depending on the shape of a battery case, and pouch-type batteries in which the electrode assembly is embedded in a pouch-type case of an aluminum laminate sheet. The electrode assembly built into the battery case is composed of a positive electrode, a negative electrode, and a separator interposed between the positive electrode and the negative electrode, and is a power generating element capable of charging and discharging. The electrode assembly is classified into a jelly-roll type wound with a separator interposed between the positive electrode and the negative electrode which are long sheet-shaped and are coated with active materials, and a stack type in which a plurality of positive electrodes and negative electrodes of a predetermined size are sequentially stacked while a separator is interposed therebetween.

Herein, as the capacity of the battery increases, the size of the case also increases and the processing of a thin material is drawing attention. As such, the amount of use of pouch-type batteries, which have a structure where a stack-type or stack/folding-type electrode assembly is built in a pouch-type battery case of an aluminum laminate sheet, gradually increases for the reasons of low manufacturing costs, a low weight, and an easy form modification, etc.

Such a secondary battery is degenerated as a large amount of gases are generated by electrolyte decomposition by repeated charge/discharge, and this aspect is differently shown depending on the battery design and used type. When the internal gas is continually generated in the battery, a swelling phenomenon, in which the volume of the battery increases, is observed, and when the internal pressure of the battery cell exceeds a critical point, the battery may be exploded. As such, it is essential to observe the volume change of the battery cell.

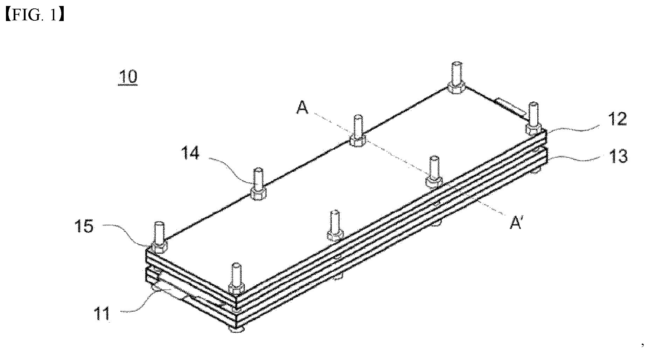

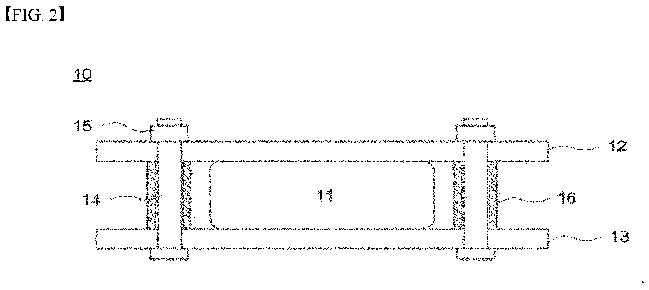

Conventionally, in order to observe the volume change of the battery cell, the volume change amount of the battery cell was measured using Archimedes principle. At this time, in order to press the battery cell, the battery cell was accommodated in a battery cell jig, and an experiment was then conducted. FIG. 1 is a schematic diagram of a conventional battery cell jig for evaluating performance of a secondary battery, and FIG. 2 is a right-side cross-sectional view (A-A') of the battery cell jig illustrated in FIG. 1. As shown in FIG. 1, the battery cell jig 10 performs bolt fastening using nuts 15 and bolts 14 which penetrate the first plate 12 and the second plate 13 to fix the battery cell 11. Further, since there has been a problem that the pressure applied to the battery cell 11 is different by locations according to the order of fastening the bolts 14 and nuts 15 or the worker's style, a method of minimizing the biased pressure application by locations or fastening errors by using spacers fitting the thickness of the battery cell 11 has been used as illustrated in FIG. 2.

However, when the volume change amount is measured using Archimedes principle in a state that the battery cell 11 is accommodated in the battery cell jig 10, inaccurate data may be obtained as water is stagnated in a space between the battery cell jig 10 and the spacer 16, which may lead to corrosion of the bolt 14 and the battery cell jig 10. As such, the volume of the battery cell should have been measured after disassembling the battery cell jig 10.

KR 100 922 571 B1 describes a jig for a battery device including a jig for a winding device, a jig for a case, and a jig unit. The jig for the winding device impregnates the winding device in electrolyte. The jig for the winding device includes a supporting plate and a guide plate. The winding device is inserted to a supporting hole of the supporting plate. The guide plate is bonded in a bottom surface of the supporting plate. A guide hole is formed on the guide plate in order to guide the winding device. The jig for the case is positioned in a bottom part of the jig for the winding device. The jig for the case bonds the impregnated winding device to the case. The jig unit guides the winding device.

CN 111 504 414 A describes a method and device for battery cell gas production rate detection. An insulating liquid and a battery cell to be detected are provided. The battery cell is immersed in the insulating liquid. An initial mass of the battery cell, an initial volume of the battery cell and the density of the insulating liquid are determined. Charging and/or discharging operation is carried out on the battery cell. A gravity test value of the battery cell in the insulating liquid is obtained during the charging and/or discharging operation of the battery cell. The gas production rate of the battery cell is determined according to the gravity test value of the battery cell, the initial mass of the battery cell, the initial volume of the battery cell and the density of the insulating liquid.

KR 102 070 684 B1 describes a secondary battery evaluation apparatus comprising a fixing jig configured to hold a secondary battery and limit the expansion of the secondary battery, and measuring a reaction force change according to the charging/discharging cycle of the secondary battery; a variable jig configured to hold the secondary battery and allow a window of the secondary battery, and measuring reaction force and a thickness variation according to the charging/discharging cycle of the secondary battery; and a derivation unit deriving a relationship between the thickness variation of the secondary battery and the reaction force using the reaction force measured by the fixing jig and the reaction force and the thickness variation amount measured by the variable jig.

[Disclosure]

[Technical Problem]

The present invention is believed to solve at least some of the above problems. For example, an aspect of the present invention provides a battery cell jig including a spacer laminate, which is capable of preventing stagnation of water at a space between the battery cell jig and the spacer at the time of measuring a volume change of a battery cell, a battery cell volume measuring apparatus including the battery cell jig, and a battery cell volume measuring method performed by using the apparatus.

[Technical Solution]

The present invention provides a battery cell jig including a spacer laminate. In one example, a battery cell jig according to the present invention includes: first and second plates; a bolt and a nut which fix the first and second plates in a state that a battery cell is interposed between the first and second plates; and a spacer laminate which is positioned between the first plate and the second plate to designate a separation distance, and is generated by laminating n spacers having a structure of surrounding a bolt, wherein the n is an integer equal to or greater than 2. At this time, each of the spacers includes a slit unit which is opened along a longitudinal direction of the spacer.

In one example, the slit unit of the spacer is opened from one side to the other side along the longitudinal direction of the spacer laminate. Further, the slit unit of the spacer may be opened in a range of 10 to 70 degrees from a center of an axis.

In another example, one end of the spacer has a protrusion or an indentation portion which has a central region which has been protruded or indented in a stepped structure. At this time, the other end of the spacer may have a protrusion or an indentation portion which has a central region which has been protruded or indented in a stepped structure. In a specific example, one end of a k-th spacer has a protrusion or an indentation portion, and the other end of a (k+1)-th spacer has an indentation portion or a protrusion corresponding to the protrusion or the indentation portion of the k-th spacer. Herein the k is an integer equal to or greater than 1 and equal to or less than n-1.

In further another example, one end of the spacer has a bump or a groove, and the other end of the spacer has a groove or a bump. In a specific example, one end of a k-th spacer has a bump or a groove, and the other end of a (k+1)-th spacer has a groove or a bump corresponding to the bump or the groove of the k-th spacer, and wherein the k is an integer equal to or greater than 1 and equal to or less than n-1.

Further, the battery cell jig may include 4 to 12 bolts and nuts, respectively, and the spacer may be fastened by at least one bolt.

Further, the present invention provides a battery cell volume measuring apparatus including the above-described battery cell jig. In one example, an apparatus for measuring a volume of a battery cell according to the present invention includes: the battery cell jig; a water tank where liquid is accommodated therein; and a scale which measures a weight of the battery cell jig, where the battery cell has been accommodated, at an external side of the water tank and at an internal side of the water tank, respectively. **In** a specific example, the battery cell volume measuring apparatus further includes a charge and discharge unit which is electrically connected to the battery cell.

Further, the present invention provides a battery cell volume measuring method performed by using the above-described battery cell volume measuring apparatus. **In** one example, a method of measuring a volume of a battery cell according to the present invention is performed by interposing a battery cell in the battery cell jig and then measuring weights before and after a volume change of the battery cell, respectively.

**In** a specific example, the method includes: interposing the battery cell in the battery cell jig and then measuring the weight of the battery cell jig in the air; accommodating the battery cell jig in a water tank where liquid has been accommodated, and then measuring the weight of the battery cell jig in the liquid; and calculating a volume change amount of the battery cell by a following formula 1:

[Formula 1]

$$V = \frac{W1 - W2}{\rho}$$

Herein, the V denotes the volume change amount of the battery cell, W1 denotes the weight of the battery cell jig in the air, W2 denotes the weight of the battery cell jig accommodated in liquid, and $\rho$ denotes a density of the liquid.

At this time, the method further includes charging and discharging the battery cell during the measuring of the weight of the battery cell jig accommodated in the liquid.

Further, during the measuring of the weight of the battery cell jig in the air and the measuring of the weight of the battery cell jig in the liquid, the weight of the battery cell jig may be measured by using a spring scale.

In another example, the method further includes heating the liquid to a predetermined temperature during the measuring of the weight of the battery cell jig accommodated in the liquid. At this time, the calculating of the volume change amount of the battery cell includes calculating a volume change of the battery cell according to a temperature of the liquid.

[Advantageous Effects]

According to a battery cell jig including a spacer laminate, a battery cell volume measuring apparatus including the battery cell jig, and a battery cell volume measuring method performed by using the apparatus of the present invention, it is possible to easily adjust a space between first and second plates where a battery cell has been interposed therebetween by including a spacer which can be assembled in the spacer laminate. Further, it is possible to preventing stagnation of water at a space between the battery cell jig and the spacer when measuring the volume change of the battery cell by including a slit unit opened along a longitudinal direction in the spacer.

[Brief Description of the Drawings]

FIG. 1 is a schematic diagram of a conventional battery cell jig for evaluating performance of a secondary battery.
FIG. 2 is a right-side cross-sectional view (A-A') of the battery cell jig illustrated in FIG. 1.
FIG. 3 is a cross-sectional view of a battery cell jig including a spacer laminate according to one embodiment of the present invention.

FIG. 4 is a schematic diagram showing a spacer laminate in a battery cell jig according to one embodiment of the present invention.
FIG. 5 is a cross-sectional view of a battery cell jig including a spacer laminate according to another embodiment of the present invention.
FIG. 6 is a schematic diagram showing a spacer in a battery cell jig according to another embodiment of the present invention.
FIG. 7 is a schematic diagram showing a spacer laminate in a battery cell jig according to another embodiment of the present invention.
FIG. 8 is a cross-sectional view of a battery cell jig including a spacer laminate according to another embodiment of the present invention.
FIG. 9 is a schematic diagram showing a spacer in a battery cell jig according to another embodiment of the present invention.
FIG. 10 is a schematic diagram showing a spacer laminate in a battery cell jig according to another embodiment of the present invention.
FIG. 11 is a diagram illustrating each component of a battery cell volume measuring apparatus according to further another embodiment of the present invention.
FIG. 12 is a flowchart illustrating a method of measuring the volume of a battery cell according to further another embodiment of the present invention.

[Detailed Description of the Preferred Embodiments]

As the inventive concept allows for various changes and numerous embodiments, particular embodiments will be illustrated in the drawings and described in detail in the text. However, this is not intended to limit the present invention to the specific form disclosed, and it should be understood to include all changes, equivalents, and substitutes included in the spirit and scope of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

The present invention provides a battery cell jig including a spacer laminate, a battery cell volume measuring apparatus including the battery cell jig, and a battery cell volume measuring method performed by using the apparatus.

Conventionally, the volume change amount of the battery cell was measured using Archimedes principle. At this time, in order to press a battery cell, a battery cell was accommodated in a battery cell jig to perform an experiment, and in order to press the battery cell accommodated in the battery cell jig with uniform pressure, spacers corresponding to the thickness of the battery cell were used to minimize biased pressure application by locations and fastening errors. However, when the volume change amount is measured using Archimedes principle in a state that the battery cell is accommodated in the battery cell jig, inaccurate data may be obtained as water is stagnated in a space between the battery cell jig and the spacer, which may lead to corrosion of the bolt and the battery cell jig. As such, the volume of the battery cell should have been measured after disassembling the battery cell jig.

As such, the present invention provides a battery cell jig including a spacer laminate, which is capable of preventing stagnation of water at a space between the battery cell jig and the spacer at the time of measuring a volume change of a battery cell, a battery cell volume measuring apparatus including the battery cell jig, and a battery cell volume measuring method performed by using the apparatus.

Specifically, according to a battery cell jig including a spacer laminate, a battery cell volume measuring apparatus including the battery cell jig, and a battery cell volume measuring method performed by using the apparatus of the present invention, it is possible to easily adjust a space between first and second plates where a battery cell has been interposed therebetween by including a spacer laminate generated by laminating spacers. Further, it is possible to preventing stagnation of water at a space between the battery cell jig and the spacer when measuring the volume change of the battery cell by including a slit unit opened along a longitudinal direction in the spacer.

**In** one embodiment, the present invention provides a battery cell jig including a spacer laminate. In a specific example, a battery cell jig according to the present invention includes: first and second plates; a bolt and a nut which fix the first and second plates in a state that a battery cell is interposed between the first and second plates; and a spacer laminate which is positioned between the first plate and the second plate to designate a separation distance, and is generated by laminating n spacers having a structure of surrounding a bolt, wherein the n is an integer equal to or greater than 2. At this time, each spacer includes a slit unit which is opened along a longitudinal direction of the spacer.

In the present invention, the "slit unit" refers to a gap formed along the longitudinal direction in the spacer and means an open region formed along the longitudinal direction of the spacer. Particularly, since the battery cell jig according to the present invention includes a slit unit in a spacer, it is possible to prevent stagnation of water or gas in the space at the time of measuring the volume change of a battery cell using Archimedes principle.

In one example, a battery cell jig according to the present invention includes a spacer including a slit unit opened along a longitudinal direction. The spacer is used to maintain the distance between the first and second plates constant and has a structure of surrounding a bolt. The spacer may be made of aluminum.

Further, the slit unit may be opened from one side to the other side along the longitudinal direction of the spacer. Specifically, the slit unit may be opened from one side to the other side along the longitudinal direction of a spacer laminate which is generated by laminating n spacers.

In a specific example, the spacer has a "C" shape when viewed based on a cross-section. It is possible to prevent water from stagnating in the spacer or gas from being filled in the spacer at the time of measuring the volume of a battery cell using Archimedes principle by a slit unit of such a spacer.

In one example, the slit unit of the spacer may be opened in a range of 10 to 70 degrees from the center of the axis. In a specific example, the slit unit of the spacer is opened in a range of 10 to 70 degrees from the center of the axis on the basis of the cross-section of the spacer. For example, the slit unit may be opened by a range of 20 to 70 degrees, 30 to 70 degrees or 40 to 70 degrees, or by 60 degrees on average, on the basis of the axis of the spacer. Since the slit unit is opened in the above-mentioned angle, it is possible to prevent water from stagnating or gas from being filled at a space between the battery cell jig and the spacer.

Further, when measuring the volume change of the battery cell using Archimedes principle, the volume change of the battery cell may be measured after the spacer is separated from the battery cell jig because the spacer is opened at the above-described angle.

In one example, in the battery cell jig according to the present invention, the spacer laminate has a structure obtained by laminating n spacers (the n is an integer equal to or greater than 2). Herein, the n may be an integer in the range of 2 to 10, 2 to 8, 2 to 6, or 2 to 5 or may be 3. However, the present invention is not limited thereto. Conventionally, when a battery cell is interposed between first and second plates, the pressure applied to the battery cell has been different according to the order of fastening bolts and nuts or the worker's tendency. However, in the present invention, since it is possible to laminate n spacers according to the height of the battery cell interposed between the first plate and the second plate, it is possible to minimize pressure imbalance according to the fastening locations of bolts and nuts or the fastening errors of bolts and nuts. Further, n spacers (n is an integer equal to or greater than 2) are laminated to form a spacer laminate, and the height of the spacer laminate preferably corresponds to the height of the battery cell interposed between the first plate and the second plate.

In one example, the spacer laminate is used to maintain the distance between the first and second plates constant and has a structure of surrounding a predetermined region of bolts. As described above, a height of the spacer laminate may correspond to a height of the battery cell interposed between the first and second plates. As such, it is possible to easily adjust the space between the first and second plates. Specifically, the user allows a battery cell to be positioned at the second plate coupled with the bolt, and allows the spacer to be inserted into the bolt. Further, after laminating n spacers to allow the height of the battery cell to correspond to the height of the spacer laminate, the first plate may be coupled, and fastening may be performed by nuts.

In one example, the battery cell jig according to the present invention includes a plurality of bolts and nuts. In a specific example, the battery cell jig according to the present invention includes 4 to 12 or 6 to 10 bolts and nuts, respectively. For example, the battery cell jig includes 10 bolts and nuts, respectively. Further, the spacer may be fastened with at least one bolt. Namely, each of spacers is fastened to each of the plurality of bolts, and the spacers are fastened to have the same height. Further, each bolt and nut may be fastened with the same pressure.

Further, n spacers constituting the spacer laminate may have the same height or may have different heights. For example, the n spacers may be spacers having different heights. As n spacers constituting the spacer laminate have different heights, it may become easier to allow the height of the spacer laminate to correspond to the height of the battery cell.

In another example, one end of the spacer has a protrusion or an indentation portion which has a central region which has been protruded or indented in a stepped structure, and the other end of the spacer has a protrusion or an indentation portion which has a central region which has been protruded or indented in a stepped structure. Herein, a stepped structure means a structure where steps are formed. Specifically, in a spacer laminate of the present invention, one end of a k-th spacer has a protrusion or an indentation portion, and the other end of a (k+1)-th spacer has an indentation portion or a protrusion corresponding to the protrusion or the indentation portion of the k-th spacer. Herein the k is an integer equal to or greater than 1 and equal to or less than n-1.

For example, one end of the spacer may have a protrusion which has a central region which has been protruded in a stepped structure, and the other end of the spacer may have an indentation portion which has a central region which has been indented in a stepped structure. In a specific example, in a spacer laminate of the present invention, one end of a k-th spacer has a protrusion, and the other end of a (k+1)-th spacer has an indentation portion corresponding to the protrusion of the k-th spacer. Herein the k is an integer equal to or greater than 1 and equal to or less than n-1. Namely, the indentation portion of the (k+1)-th spacer may be laminated on the protrusion of the k-th spacer.

In further another example, one end of the spacer has a bump or a groove, and the other end of the spacer has a groove or a bump. Further, at least one bump or groove may be respectively formed at one side or the other side of the spacer.

Specifically, in a spacer laminate of the present invention, one end of a k-th spacer has a bump or a groove, and the other end of a (k+1)-th spacer has a groove or a bump corresponding to the bump or the groove of the k-th spacer. Herein the k is an integer equal to or greater than 1 and equal to or less than n-1. In a specific example, in a spacer laminate of the present invention, one end of a k-th spacer has a bump, and the other end of a (k+1)-th spacer has a groove corresponding to the bump of the k-th spacer. Herein the k is an integer equal to or greater than 1 and equal to or less than n-1. Namely, n spacers may be easily laminated by allowing the groove of the (k+1)-th spacer to contact the bump of the k-th spacer.

Further, when the (k+1)-th spacer is laminated on the upper portion of the k-th spacer, it is possible to prevent the spacer from being rotated in the axial direction by the bump and the groove, and it is possible to easily adjust the space between the first plate and the second plate where a battery cell has been interposed.

Further, the present invention provides a battery cell volume measuring apparatus including the above-described battery cell jig.

In one example, an apparatus for measuring a volume of a battery cell according to the present invention includes: the battery cell jig; a water tank where liquid is accommodated therein; and a scale which measures a weight of the battery cell jig, where the battery cell has been accommodated, at an external side of the water tank and at an internal side of the water tank, respectively.

The apparatus for measuring the volume of a battery cell according to the present invention uses the principle of Archimedes. According to Archimedes principle, the buoyancy applied to an object which is fully or partially dipped in liquid works in a direction opposite to the direction of gravity by the same size as that of the weight of the liquid as much as the volume pushed aside by the object ($F=\rho gV=mg$, herein, F: buoyancy, $\rho$: density of liquid, V: volume of an object as much as the amount dipped in the liquid, g: acceleration of gravity, m: mass of object). At this time, the difference between the weight of the battery cell before being dipped in the liquid accommodated in the water tank and the weight of the battery cell after being dipped in the liquid may be the weight of the liquid which has increased in volume as the battery cell is dipped in the liquid. At this time, since the weight of the liquid, which is pushed aside as the battery cell is dipped in the liquid, is the same as the buoyancy, the volume of the battery cell can be recognized from the measured buoyancy. Namely, if the weight of the battery cell in the air and the weight of the battery cell in the liquid are found out, the volume of the battery cell can be calculated.

Likewise, according to the battery cell volume measuring apparatus of the present invention, it is possible to measure the volume of a battery cell in a non-destructive manner in a normal pressure by only measuring the weight of the battery cell without a process of punching or pressing the battery.

In one example, the water tank has a space where liquid can be accommodated therein. There is no particular limitation to the type of liquid accommodated in the water tank. For example, water can be accommodated. Alternatively, liquid such as ethanol can be used, and electrically insulating liquid such as silicone oil can be used.

The battery cell jig fixes the battery cell in order to prevent a movement of the battery cell during the volume measurement. As described above, the battery cell jig includes: first and second plates; a bolt and a nut which fix the first and second plates in a state that a battery cell is interposed between the first and second plates; and a spacer which is positioned between the first and second plates to designate a separation distance and have a structure of surrounding the bolt. At this time, the spacer includes a slit unit which is opened along a longitudinal direction.

Further, the battery cell may be a pouch-type unit cell. Specifically, the pouch type unit cell may have a structure that an electrode assembly having a positive electrode/ separator/ negative electrode structure is embedded in an exterior material of the laminate sheet in a state that is connected to electrode leads formed outside the exterior material. The electrode leads may be drawn to the outside of the sheet and may be extended in the same or opposite direction to each other.

In addition, the scale is used to measure the weight of the battery cell jig having a battery cell accommodated therein, and the weight at the external side of the water tank of the battery cell jig and the weight in the liquid are measured. Herein, the weight at the external side of the water tank means the weight of the battery cell jig in the air. The scale may be a conventional scale for measuring a weight. For example, the scale may be a spring scale or an electronic scale.

In one example, the battery cell volume measuring apparatus further includes a charge and discharge unit which is electrically connected to the battery cell. The charge/discharge unit may supply power for charge to the secondary battery or receive discharge power from the secondary battery. Herein, supplying power to the secondary battery is not limited to supplying power which is sufficient for fully charging the secondary battery. Supplying power to the secondary battery may also mean supplying power which may be sufficient for measuring voltages of the first electrode lead and the second electrode lead to evaluate performance of the secondary battery. The same may be applied to the meaning of receiving discharge power from the secondary battery, and thus repeated description thereof is omitted here.

Further, the present invention provides a battery cell volume measuring method performed by using the above-described battery cell volume measuring apparatus.

In one example, a method of measuring a volume of a battery cell according to the present invention is performed by interposing a battery cell in the battery cell jig and then measuring weights before and after a volume change of the battery cell, respectively.

In a specific example, a method of measuring the volume of a battery cell according to the present invention includes: interposing the battery cell in the battery cell jig and then measuring the weight of the battery cell jig in the air; accommodating the battery cell jig in a water tank where liquid has been accommodated, and then measuring the weight of the battery cell jig in the liquid; and calculating a volume change amount of the battery cell by a following formula 1:

[Formula 1]

$$V = \frac{W1 - W2}{\rho},$$

Herein, the V denotes the volume change amount of the battery cell, W1 denotes the weight of the battery cell jig in the air, W2 denotes the weight of the battery cell jig accommodated in liquid, and $\rho$ denotes a density of the liquid.

As described above, the method of measuring the volume of a battery cell according to the present invention uses the principle of Archimedes. Specifically, the difference between the weight of the battery cell before being dipped in the liquid accommodated in the water tank and the weight of the battery cell after being dipped in the liquid may be the weight of the liquid which has increased in volume as the battery cell is dipped in the liquid. At this time, since the weight of the liquid, which is pushed aside as the battery cell is dipped in the liquid, is the same as the buoyancy, the volume of the battery cell can be recognized from the measured buoyancy.

Likewise, according to the battery cell volume measuring method of the present invention, it is possible to measure the volume of a battery cell in a non-destructive manner in a normal pressure by only measuring the weight of the battery cell without a process of punching the battery.

Further, a step of interposing the battery cell in the battery cell jig and then measuring the weight of the battery cell jig in the air is performed. At this time, the battery cell jig having the battery cell interposed therein can measure the weight using a scale such as a spring scale.

Further, the battery cell jig is accommodated in a water tank where liquid has been accommodated. There is no particular limitation to the type of liquid accommodated in the water tank. For example, water can be accommodated. Alternatively, liquid such as ethanol can be used, and electrically insulating liquid such as silicone oil can be used.

In one example, a method of measuring the volume of a battery cell according to the present invention includes a step of measuring the weight of a battery cell jig in liquid. In a specific example, the step of measuring the weight of the battery cell jig in the liquid includes a process of charging and discharging the battery cell. In the charging and discharging process, it is possible to activate the battery cell by charging and discharging the battery cell through a charge and discharge unit which is electrically connected to the battery cell.

Further, it is possible to measure the volume of the internal gas which is generated during charge/-discharge through the charge/discharge process by measuring the weight of the battery cell accommodated in the liquid.

Thereafter, in the method of measuring the volume of a battery cell according to the present invention, it is possible to calculate the volume change amount of the battery cell by the formula 1 by using the weight of the battery cell measured in the air and the weight of the battery cell measured in the liquid.

**In** another example, the method further includes heating the liquid to a predetermined temperature during the measuring of the weight of the battery cell jig accommodated in the liquid. Such a process can be performed by a temperature control unit of the battery cell volume measuring apparatus. For example, it can be performed by heating an iron plate surrounding the water tank. Herein, the process of heating the liquid should be performed before the step of measuring the weight of the battery cell accommodated in the liquid. The temperature of liquid can be measured by a temperature measuring unit such as a thermocouple, through which the liquid can be heated up to a predetermined temperature.

As such, the method of measuring the volume of a battery cell according to the present invention further includes a step of calculating the volume change of the battery cell according to the temperature of the liquid. For example, after the temperature of the liquid is set to 45, 60 or 80°C and the volume of the battery cell at this time is measured, respectively, the volume change trend of the battery cell according to the temperature can be derived.

Hereinafter, the present invention will be described in more detail through drawings and the like. As the inventive concept allows for various changes and numerous embodiments, particular embodiments will be illustrated in the drawings and described in detail in the text. However, this is not intended to limit the present invention to the specific form disclosed, and it should be understood to include all changes, equivalents, and substitutes included in the spirit and scope of the present invention.

**(First embodiment)**

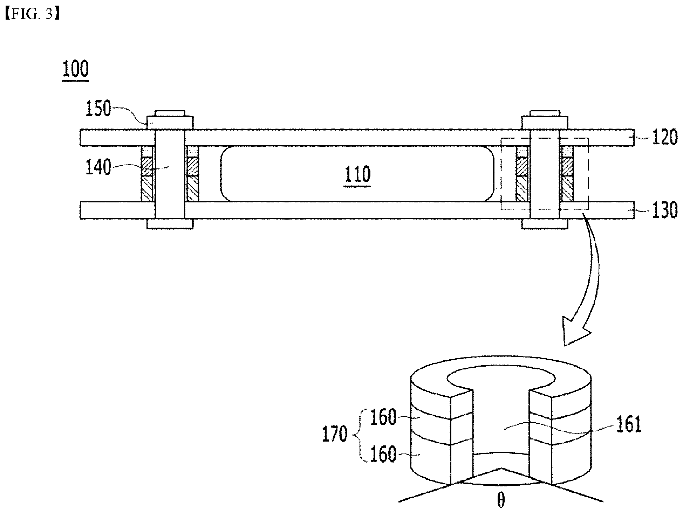

FIG. 3 is a cross-sectional view of a battery cell jig including a spacer laminate according to one embodiment of the present invention.

Referring to FIG. 3, a battery cell jig 100 according to the present invention includes: first and second plates 120 and 130; a bolt 140 and a nut 150 which fix the first and second plates in a state that a battery cell 110 is interposed between the first and second plates 120 and 130; and a spacer laminate 170 which is positioned between the first plate 120 and the second plate 130 to designate a separation distance, and is generated by laminating n spacers 160 having a structure of surrounding a bolt 140, in which the n is an integer equal to or greater than 2. At this time, each spacer 160 includes a slit unit 161 opened along a longitudinal direction of the spacer 160.

Specifically, the spacer laminate 170 is used to maintain the distance between the first and second plates 120 and 130 constant and has a structure of surrounding the bolt 140. At this time, the slit unit 161 of the spacer is opened from one side to the other side along the longitudinal direction of the spacer 160. More specifically, the slit unit 161 is opened from one side to the other side along the longitudinal direction of the spacer laminate 170. Namely, since the spacer 160 or the spacer laminate 170 is opened along the longitudinal direction, it is possible to prevent water from stagnating in the spacer 160 or gas from being filled in the spacer 160 when measuring the volume of the battery cell 110 using Archimedes principle.

The slit unit 161 of the spacer 160 may be opened by 60 degrees on average on the basis of the axis. Since the slit unit 161 is opened in the above-mentioned angle, it is possible to prevent water from stagnating or gas from being filled at a space between the battery cell jig 100 and the spacer 160. Further, it is possible to adjust the space between the first and second plates 120 and 130 by using the n spacers 160, and when measuring the volume change of the battery cell 110 using Archimedes principle, it is possible to measure the volume change of the battery cell 110 after the spacer 160 is separated from the battery cell jig 100 because the spacer 160 is opened at the above-described angle.

At this time, the height of the spacer laminate 170, which is generated by laminating the n spacers 160, corresponds to the height of the battery cell 110 interposed between the first plate 120 and the second plate 130. As such, it is possible to easily adjust the space between the first and second plates 120 and 130. More specifically, the user allows the battery cell 110 to be positioned on the second plate 130 coupled with the bolt 140, and n spacers 160 are inserted into the bolt 140. Thereafter, the first plate 120 is coupled and is fastened by nuts 150.

Further, the battery cell jig 100 according to the present invention includes a plurality of bolts 140 and nuts 150. Specifically, the battery cell jig 100 according to the present invention includes 4 to 12 bolts 140 and nuts 150, respectively. For example, the battery cell jig 100 includes 10 bolts 140 and nuts 150, respectively. However, the present invention is not limited thereto.

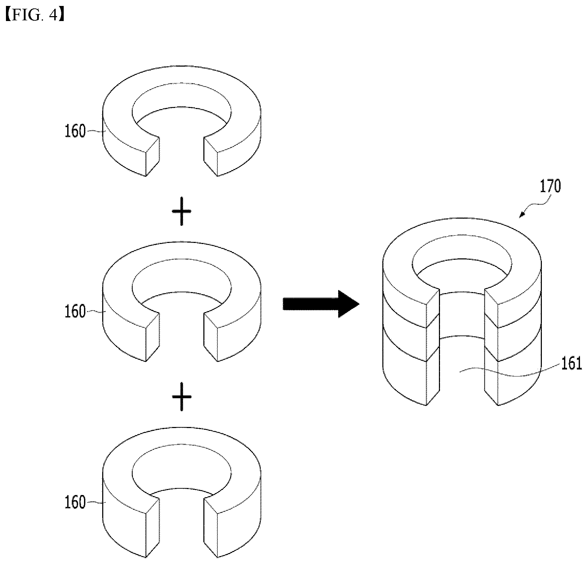

FIG. 4 is a schematic diagram showing a spacer laminate in a battery cell jig according to one embodiment of the present invention. Referring to FIG. 4, the spacer 160 according to the present invention has a hole through which a bolt 140 passes through along the axial direction. Further, the spacer 160 includes a slit unit 161 opened along a longitudinal direction.

Further, n spacers 160 constituting the spacer laminate 170 may have the same height or may have different heights. For example, the n spacers 160 may be spacers 160 having different heights. As n spacers 160 constituting the spacer laminate 170 have different heights, it may become easier to allow the height of the spacer laminate 170 to correspond to the height of the battery cell 110.

According to the battery cell jig 100 of the present invention, it is possible to prevent stagnation of water in a space between the battery cell jig 100 and the spacer 160 when measuring the volume change of the battery cell 110 using Archimedes principle by including the spacer 160 having a slit unit 161. Further, it is possible to easily adjust the space between the first plate 120 and the second plate 130, where the battery cell 110 is interposed, by forming a spacer laminate 170 which is formed by laminating the spacers 160 to have a height corresponding to the height of the target battery cell 110.

**(Second embodiment)**

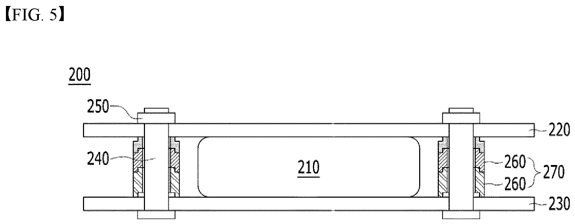

FIG. 5 is a cross-sectional view of a battery cell jig including a spacer laminate according to another embodiment of the present invention.

Referring to FIG. 5, a battery cell jig 200 according to the present invention includes: first and second plates 220 and 230; a bolt 240 and a nut 250 which fix the first and second plates in a state that a battery cell 210 is interposed between the first and second plates 220 and 230; and a spacer laminate 270 which is positioned between the first plate 220 and the second plate 230 to designate a separation distance, and is generated by laminating n spacers 260 having a structure of surrounding a bolt 240, in which the n is an integer equal to or greater than 2. At this time, each spacer 260 includes a slit unit 261 opened along a longitudinal direction of the spacer 260.

Specifically, the spacer laminate 270 is used to maintain the distance between the first and second plates 220 and 230 constant and has a structure of surrounding the bolt 240. More specifically, the spacer laminate 270 has a structure which is generated by laminating n spacers 260 (the n is an integer equal to or greater than 2).

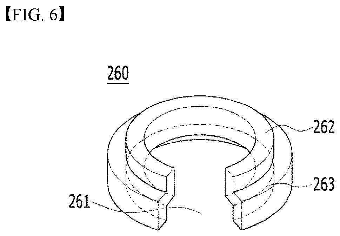

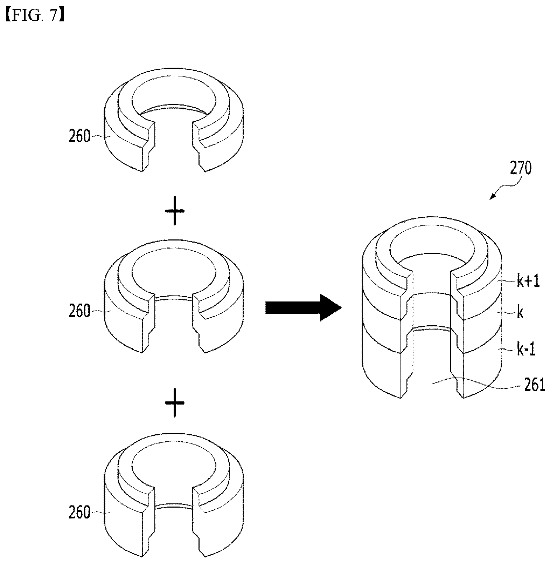

FIG. 6 is a schematic diagram showing a spacer in a battery cell jig according to another embodiment of the present invention, and FIG. 7 is a schematic diagram showing a spacer laminate in a battery cell jig according to another embodiment of the present invention.

Referring to FIGS. 6 and 7, one end of the spacer 260 has a protrusion or an indentation portion which has a central region which has been protruded or indented in a stepped structure, and the other end of the spacer 260 has a protrusion or an indentation portion which has a central region which has been protruded or indented in a stepped structure. Further, the spacer 260 includes a slit unit 261 opened along a longitudinal direction.

Specifically, one end of the spacer 260 has a protrusion 262 which has a central region which has been protruded in a stepped structure, and the other end of the spacer 260 may have an indentation portion 263 which has a central region which has been indented in a stepped structure. In a specific example, in a spacer laminate 270, one end of a k-th spacer 260 has a protrusion 262, and the other end of a (k+1)-th spacer 260 has an indentation portion 263 corresponding to the protrusion 262 of the k-th spacer. Herein the k is an integer equal to or greater than 1 and equal to or less than n-1. Namely, the indentation portion of the (k+1)-th spacer 260 may be laminated on the protrusion of the k-th spacer 260.

Further, since each component has been described above, the detailed description of each component will be omitted here.

**(Third embodiment)**

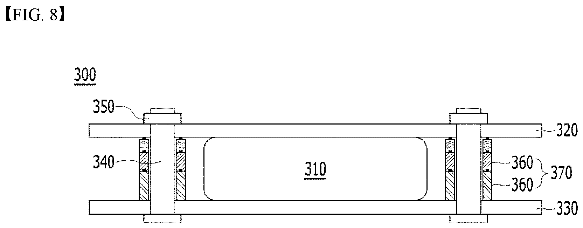

FIG. 8 is a cross-sectional view of a battery cell jig including a spacer laminate according to another embodiment of the present invention.

Referring to FIG. 8, a battery cell jig 300 according to the present invention includes: first and second plates 320 and 330; a bolt 340 and a nut 350 which fix the first and second plates in a state that a battery cell 310 is interposed between the first and second plates 320 and 330; and a spacer laminate 370 which is positioned between the first plate 320 and the second plate 330 to designate a separation distance, and is generated by laminating n spacers 360 having a structure of surrounding a bolt 340, in which the n is an integer equal to or greater than 2. At this time, each spacer 360 includes a slit unit 361 opened along a longitudinal direction of the spacer 360.

Specifically, the spacer laminate 370 is used to maintain the distance between the first and second plates 320 and 330 constant and has a structure of surrounding the bolt 340. More specifically, the spacer laminate 370 has a structure which is generated by laminating n spacers 360 (the n is an integer equal to or greater than 2).

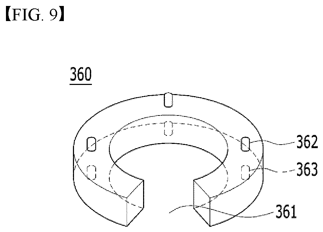

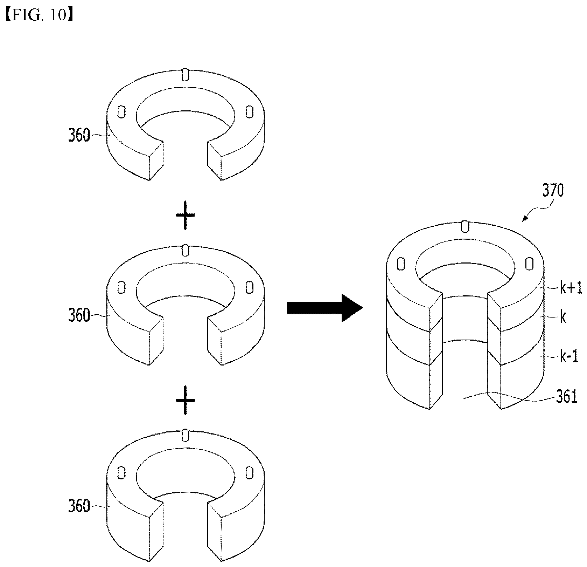

FIG. 9 is a schematic diagram showing a spacer in a battery cell jig according to another embodiment of the present invention, and FIG. 10 is a schematic diagram showing a spacer laminate in a battery cell jig according to another embodiment of the present invention.

Referring to FIGS. 9 to 10, one end of the spacer 360 has a bump or a groove, and the other end of the spacer 360 has a groove or a bump. Specifically, in a spacer laminate 370, one end of a k-th spacer 360 has a bump 362, and the other end of a (k+1)-th spacer 360 has a groove 363 corresponding to the bump 362 of the k-th spacer. Herein the k is an integer equal to or greater than 1 and equal to or less than n-1. Namely, n spacers 360 may be easily laminated by allowing the groove of the (k+1)-th spacer 360 to contact the bump of the k-th spacer 360.

Further, when the (k+1)-th spacer 360 is laminated on the upper portion of the k-th spacer 360, it is possible to prevent the spacer 360 from being rotated in the axial direction by the bump and the groove, and it is possible to easily adjust the space between the first plate 320 and the second plate 330 where a battery cell 310 has been interposed.

**(Fourth embodiment)**

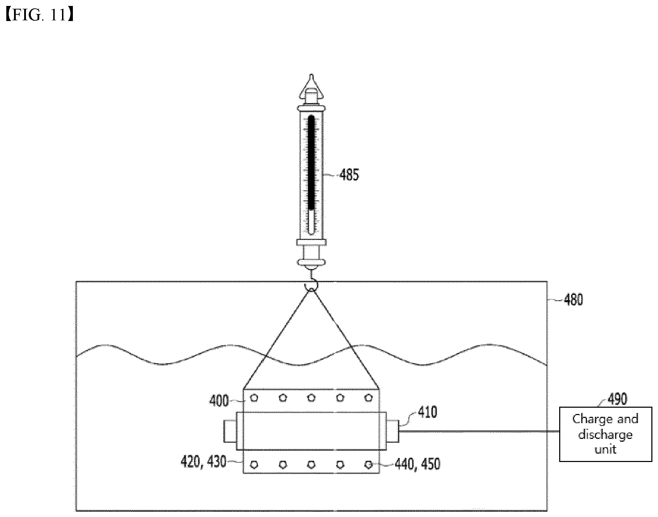

FIG. 11 is a diagram illustrating each component of a battery cell volume measuring apparatus according to further another embodiment of the present invention.

Referring to FIG. 11, a battery cell volume measuring apparatus according to the present invention includes: the battery cell jig 400; a water tank 480 where liquid is accommodated therein; and a scale 385 which measures a weight of the battery cell jig 400, where the battery cell 410 has been accommodated, at an external side of the water tank 480 and at an internal side of the water tank 480, respectively. The battery cell volume measuring apparatus according to the present invention measures the volume change amount of the battery cell 410 using Archimedes principle. More specifically, the volume change amount of the battery cell 410 can be calculated by calculating the difference between the weight of the battery cell 410 which is measured before being dipped in the liquid accommodated in the water tank 480, and the weight of the battery cell 410 after being dipped in the liquid.

The water tank 480 has a space capable of accommodating liquid therein. There is no particular limitation to the type of liquid accommodated in the water tank 480. For example, water can be accommodated. Alternatively, liquid such as ethanol can be used, and electrically insulating liquid such as silicone oil can be used.

The battery cell jig 400 fixes the battery cell 410 in order to prevent a movement of the battery cell 410 during the volume measurement. As described above, the battery cell jig 400 includes: first and second plates 420 and 430; a bolt 440 and a nut 450 which fix the first and second plates in a state that a battery cell 410 is interposed between the first and second plates 420 and 430; and a spacer (not shown) which is positioned between the first and second plates to designate a separation distance and have a structure of surrounding the bolt 440. At this time, the spacer includes a slit unit (not shown) which is opened along a longitudinal direction.

Further, the scale 485 is used to measure the weight of the battery cell jig 400 having the battery cell 410 accommodated therein and measures the weight at the external side of the water tank 480 and the weight in the liquid. Herein, the weight at the external side of the water tank 480 means the weight of the battery cell jig 400 in the air. The scale 485 may be a conventional scale for measuring a weight. For example, the scale 485 may be a spring scale or an electronic scale. In the drawings, a spring scale is illustrated as the scale 485, but the present invention is not limited to this example.

Further, the battery cell volume measuring apparatus further includes a charge and discharge unit 490 which is electrically connected to the battery cell. The charge and discharge unit 490 can activate the battery cell through a charge/discharge which is electrically connected to the electrode assembly of the battery cell 410. At this time, the charge and discharge unit 490 may be electrically connected to the electrode lead of the battery cell 410 through a charge/discharge line (not shown).

Further, it is possible to measure the volume of the internal gas which is generated during charge/discharge through the charge/discharge process by measuring the weight of the battery cell 410 accommodated in the liquid.

Further, the present invention provides a battery cell volume measuring method performed by using the above-described battery cell volume measuring apparatus. In a specific example, a method of measuring a volume of a battery cell according to the present invention is performed by interposing a battery cell in the battery cell jig and then measuring weights before and after a volume change of the battery cell, respectively.

As described above, the method of measuring the volume of a battery cell according to the present invention uses the principle of Archimedes. Hereinafter, the method will be described in detail.

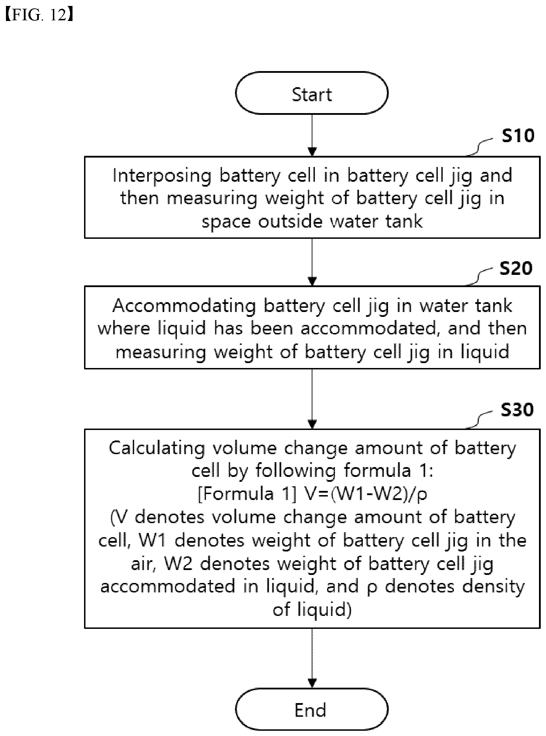

FIG. 12 is a flowchart illustrating a method of measuring the volume of a battery cell according to further another embodiment of the present invention.

Referring to FIG. 12, a method of measuring the volume of a battery cell according to the present invention includes: interposing the battery cell in the battery cell jig and then measuring the weight of the battery cell jig in the air (S10); accommodating the battery cell jig in a water tank where liquid has been accommodated, and then measuring the weight of the battery cell jig in the liquid (S20); and calculating a volume change amount of the battery cell by a following formula 1 (S30):

[Formula 1]

$$V = (W1 - W2)/\rho$$

Herein, the V denotes the volume change amount of the battery cell, W1 denotes the weight of the battery cell jig in the air, W2 denotes the weight of the battery cell jig accommodated in liquid, and $\rho$ denotes a density of the liquid.

As described above, the method of measuring the volume of a battery cell according to the present invention uses the principle of Archimedes. Specifically, the difference between the weight of the battery cell before being dipped in the liquid accommodated in the water tank and the weight of the battery cell after being dipped in the liquid may be the weight of the liquid which has increased in volume as the battery cell is dipped in the liquid. At this time, since the weight of the liquid, which is pushed aside as the battery cell is dipped in the liquid, is the same as the buoyancy, the volume of the battery cell can be recognized from the measured buoyancy.

Likewise, according to the battery cell volume measuring method of the present invention, it is possible to measure the volume of a battery cell in a non-destructive manner in a normal pressure by only measuring the weight of the battery cell without a process of punching the battery.

Specifically, the weight W1 of the battery cell jig having the battery cell interposed therein in the air, and after performing a charge/discharge process in a state that the battery cell is dipped in ethanol, the weight W2 of the battery cell jig accommodated in the liquid was measured.

At this time, the weight W1 of the battery cell jig in the air was 110 g, and the weight W2 of the battery cell jig accommodated in the liquid was 100 g. If the density of the ethanol is $\rho$= 0.789g/cm3 and the volume change amount of the battery cell is V, the weight change amount of the battery cell is the same as the weight of the ethanol pushed aside, and the volume of the ethanol pushed aside is the same of the volume change amount of the battery cell due to gas generation, that is, V. Hence, in summary, $\rho$ is (weight of ethanol pushed aside) / (volume of ethanol pushed aside). At this time, since the volume of the ethanol having been pushed aside is (the weight of the ethanol having been pushed aside)/$\rho$, V can be can be calculated by (110-100)/0.789. Namely, the volume change amount of the battery cell is about 12.674 cm$^3$.

In the above, the present invention has been described in more detail through the drawings and examples. Accordingly, the embodiments described in the specification and the configurations described in the drawings are only the most preferred embodiments of the present invention, the scope of which being defined by the appended claims.

[Description of reference numerals]

10, 100, 200, 300, 400: battery cell jig
11, 110, 210, 310, 410: battery cell
12, 120, 220, 320, 420: first plate
13, 130, 230, 330, 430: second plate
14, 140, 240, 340, 440: bolt
15, 150, 250, 350, 450: nut
16, 160, 260, 360: spacer
161, 261, 361: slit unit
262: protrusion
263: indentation portion
362: bump
363: groove
170, 270, 370: spacer laminate
480: water tank
485: scale
490: charge and discharge unit

## Claims

1. A battery cell jig (10; 100; 200; 300; 400) comprising:

   first and second plates (12; 120; 220; 320; 420; 13; 130; 230; 330; 430);
   a bolt (14; 140; 240; 340; 440) and a nut (15; 150; 250; 350; 450) which fix the first and second plates (12; 120; 220; 320; 420; 13; 130; 230; 330; 430) in a state that a battery cell (11; 110; 210; 310; 410) is interposed, in use, between the first and second plates (12; 120; 220; 320; 420; 13; 130; 230; 330; 430);
   **characterized by**
   a spacer laminate (170; 270; 370) which is positioned between the first plate (12; 120; 220; 320; 420) and the second plate (13; 130; 230; 330; 430) to designate a separation distance, and is generated by laminating n spacers (16; 160; 260; 360) having a structure of surrounding a bolt (14; 140; 240; 340; 440), wherein the n is an integer equal to or greater than 2, and
   wherein each of the spacers (16; 160; 260; 360) includes a slit unit (161; 261; 361) which is opened along a longitudinal direction of the spacer (16; 160; 260; 360).

2. The battery cell jig (10; 100; 200; 300; 400) of claim 1, wherein the slit unit (161; 261; 361) of the spacer (16; 160; 260; 360) is opened from one side to the other side along the longitudinal direction of the spacer laminate (170; 270; 370).

**3.** The battery cell jig (10; 100; 200; 300; 400) of claim 1, wherein the slit unit (161; 261; 361) of the spacer (16; 160; 260; 360) is opened in a range of 10 to 70 degrees from a center of an axis.

**4.** The battery cell jig (10; 100; 200; 300; 400) of claim 1, wherein one end of the spacer (16; 160; 260; 360) has a protrusion (262) or an indentation portion (263) which has a central region which has been protruded or indented in a stepped structure, and wherein the other end of the spacer (16; 160; 260; 360) has a protrusion (262) or an indentation portion (263) which has a central region which has been protruded or indented in a stepped structure.

**5.** The battery cell jig (10; 100; 200; 300; 400) of claim 1, wherein one end of a k-th spacer (16; 160; 260; 360) has a protrusion (262) or an indentation portion (263), and the other end of a (k+1)-th spacer (16; 160; 260; 360) has an indentation portion (263) or a protrusion (262) corresponding to the protrusion (262) or the indentation portion (263) of the k-th spacer (16; 160; 260; 360), and wherein the k is an integer equal to or greater than 1 and equal to or less than n-1.

**6.** The battery cell jig (10; 100; 200; 300; 400) of claim 1, wherein one end of the spacer (16; 160; 260; 360) has a bump (362) or a groove (363), and wherein the other end of the spacer (16; 160; 260; 360) has a groove (363) or a bump (362).

**7.** The battery cell jig (10; 100; 200; 300; 400) of claim 1, wherein one end of a k-th spacer (16; 160; 260; 360) has a bump (362) or a groove (363), and the other end of a (k+1)-th spacer (16; 160; 260; 360) has a groove (363) or a bump (362) corresponding to the bump (362) or the groove (363) of the k-th spacer (16; 160; 260; 360), and wherein the k is an integer equal to or greater than 1 and equal to or less than n-1.

**8.** The battery cell jig (10; 100; 200; 300; 400) of claim 1, wherein the battery cell jig (10; 100; 200; 300; 400) includes 4 to 12 bolts (14; 140; 240; 340; 440) and nuts (15; 150; 250; 350; 450), respectively, and wherein the spacer (16; 160; 260; 360) is fastened by at least one bolt (14; 140; 240; 340; 440).

**9.** An apparatus for measuring a volume of a battery cell, the apparatus comprising:

the battery cell jig (10; 100; 200; 300; 400) according to claim 1;
a water tank where liquid is accommodated therein; and
a scale which measures a weight of the battery cell jig (10; 100; 200; 300; 400), where the battery cell (11; 110; 210; 310; 410) has been accommodated, at an external side of the water tank (480) and at an internal side of the water tank (480), respectively.

**10.** The apparatus of claim 9, further comprising a charge and discharge unit (490) which is electrically connected, in use, to the battery cell (11; 110; 210; 310; 410).

**11.** A method of measuring a volume of a battery cell (11; 110; 210; 310; 410) by interposing a battery cell (11; 110; 210; 310; 410) in the battery cell jig (10; 100; 200; 300; 400) according to claim 1 and then measuring weights before and after a volume change of the battery cell (11; 110; 210; 310; 410), respectively.

**12.** The method of claim 11, comprising:

interposing the battery cell (11; 110; 210; 310; 410) in the battery cell jig (10; 100; 200; 300; 400) and then measuring the weight of the battery cell jig (10; 100; 200; 300; 400) in the air;
accommodating the battery cell jig (10; 100; 200; 300; 400) in a water tank (480) where liquid has been accommodated, and then measuring the weight of the battery cell jig (10; 100; 200; 300; 400) in the liquid; and
calculating a volume change amount of the battery cell (11; 110; 210; 310; 410) by a following formula 1:

[Formula 1]

$$V = \frac{W1 - W2}{\rho},$$

wherein the V denotes a volume change amount of the battery cell (11; 110; 210; 310; 410), the W1 denotes a weight of the battery cell jig (10; 100; 200; 300; 400) in the air, the W2 denotes a weight of the battery cell jig (10; 100; 200; 300; 400) accommodated in the liquid, and the $\rho$ denotes a density of the liquid.

**13.** The method of claim 12, further comprising charging and discharging the battery cell (11; 110; 210; 310; 410) during the measuring of the weight of the battery cell jig (10; 100; 200; 300; 400) accommodated in the liquid.

**14.** The method of claim 12, further comprising heating the liquid to a predetermined temperature during the measuring of the weight of the battery cell jig (10; 100; 200; 300; 400) accommodated in the liquid.

**15.** The method of claim 14, wherein the calculating of the volume change amount of the battery cell (11; 110; 210; 310; 410) includes calculating a volume change of the battery cell (11; 110; 210; 310; 410) according to a temperature of the liquid.

**Patentansprüche**

1. Batteriezellenspannvorrichtung (10; 100; 200; 300; 400) aufweisend:

   eine erste Platte und eine zweite Platte (12; 120; 220; 320; 420; 13; 130; 230; 330; 430);
   einen Bolzen (14; 140; 240; 340; 440) und eine Mutter (15; 150; 250; 350; 450), die die erste Platte und die zweite Platte (12; 120; 220; 320; 420; 13; 130; 230; 330; 430) in einem Zustand fixieren, in dem eine Batteriezelle (11; 110; 210; 310; 410) im Gebrauch zwischen der ersten Platte und der zweiten Platte (12; 120; 220; 320; 420; 13; 130; 230; 330; 430) angeordnet ist, **gekennzeichnet durch**
   ein Abstandshalterlaminat (170; 270; 370), das zwischen der ersten Platte (12; 120; 220; 320; 420) und der zweiten Platte (13; 130; 230; 330; 430) angeordnet ist, um einen Trennungsabstand festzulegen, und das durch Laminieren von n Abstandshaltern (16; 160; 260; 360) mit einer Struktur zum Umgeben eines Bolzens (14; 140; 240; 340; 440) erzeugt wird, wobei n eine ganze Zahl gleich oder größer als 2 ist, und wobei jeder der Abstandshalter (16; 160; 260; 360) eine Schlitzeinheit (161; 261; 361) aufweist, die entlang einer Längsrichtung des Abstandshalters (16; 160; 260; 360) geöffnet ist.

2. Batteriezellenspannvorrichtung (10; 100; 200; 300; 400) nach Anspruch 1, wobei die Schlitzeinheit (161; 261; 361) des Abstandshalters (16; 160; 260; 360) entlang der Längsrichtung des Abstandshalterlaminats (170; 270; 370) von einer Seite zur anderen Seite geöffnet ist.

3. Batteriezellenspannvorrichtung (10; 100; 200; 300; 400) nach Anspruch 1, wobei die Schlitzeinheit (161; 261; 361) des Abstandshalters (16; 160; 260; 360) in einem Bereich von 10 bis 70 Grad von einer Mitte einer Achse geöffnet ist.

4. Batteriezellenspannvorrichtung (10; 100; 200; 300; 400) nach Anspruch 1, wobei ein Ende des Abstandshalters (16; 160; 260; 360) einen Vorsprung (262) oder einen Vertiefungsabschnitt (263) aufweist, der einen zentralen Bereich aufweist, der in einer gestuften Struktur hervorsteht oder eingerückt wurde, und wobei das andere Ende des Abstandshalters (16; 160; 260; 360) einen Vorsprung (262) oder einen Vertiefungsabschnitt (263) aufweist, der einen zentralen Bereich aufweist, der in einer gestuften Struktur hervorsteht oder eingerückt wurde.

5. Batteriezellenspannvorrichtung (10; 100; 200; 300; 400) nach Anspruch 1, wobei ein Ende eines k-ten Abstandshalters (16; 160; 260; 360) einen Vorsprung (262) oder einen Vertiefungsabschnitt (263) aufweist, und das andere Ende eines (k+1)-ten Abstandshalters (16; 160; 260; 360) einen Vertiefungsabschnitt (263) oder einen Vorsprung (262) aufweist, der dem Vorsprung (262) oder dem Vertiefungsabschnitt (263) des k-ten Abstandshalters (16; 160; 260; 360) entspricht, und wobei k eine ganze Zahl gleich oder größer als 1 und gleich oder kleiner als n-1 ist.

6. Batteriezellenspannvorrichtung (10; 100; 200; 300; 400) nach Anspruch 1, wobei ein Ende des Abstandshalters (16; 160; 260; 360) eine Erhebung (362) oder eine Nut (363) aufweist, und wobei das andere Ende des Abstandshalters (16; 160; 260; 360) eine Nut (363) oder eine Erhebung (362) aufweist.

7. Batteriezellenspannvorrichtung (10; 100; 200; 300; 400) nach Anspruch 1, wobei ein Ende eines k-ten Abstandshalters (16; 160; 260; 360) eine Erhebung (362) oder eine Nut (363) aufweist, und das andere Ende eines (k+1)-ten Abstandshalters (16; 160; 260; 360) eine Nut (363) oder eine Erhebung (362) aufweist, die der Erhebung (362) oder der Nut (363) des k-ten Abstandshalters (16; 160; 260; 360) entspricht, und wobei k eine ganze Zahl gleich oder größer als 1 und gleich oder kleiner als n-1 ist.

8. Batteriezellenspannvorrichtung (10; 100; 200; 300; 400) nach Anspruch 1, wobei die Batteriezellenspannvorrichtung (10; 100; 200; 300; 400) 4 bis 12 Bolzen (14; 140; 240; 340; 440) bzw. Muttern (15; 150; 250; 350; 450) aufweist, und wobei der Abstandshalter (16; 160; 260; 360) durch mindestens einen Bolzen (14; 140; 240; 340; 440) befestigt ist.

9. Vorrichtung zum Messen eines Volumens einer Batteriezelle, wobei die Vorrichtung aufweist:

   die Batteriezellenspannvorrichtung (10; 100; 200; 300; 400) nach Anspruch 1;
   einen Wassertank, in dem Flüssigkeit aufgenommen ist; und
   eine Waage, die ein Gewicht der Batteriezellenspannvorrichtung (10; 100; 200; 300; 400), wo die Batteriezelle (11; 110; 210; 310; 410) aufgenommen wurde, an einer Außenseite des Wassertanks (480) bzw. an einer Innenseite des Wassertanks (480) misst.

10. Vorrichtung nach Anspruch 9, ferner aufweisend eine Lade- und Entladeeinheit (490), die im Gebrauch mit der Batteriezelle (11; 110; 210; 310; 410) elektrisch verbunden ist.

11. Verfahren zum Messen eines Volumens einer Batteriezelle (11; 110; 210; 310; 410) durch Einfügen einer Batteriezelle (11; 110; 210; 310; 410) in die Batteriezellenspannvorrichtung (10; 100; 200; 300; 400) nach Anspruch 1 und dann Messen von Gewichten vor bzw. nach einer Volumenänderung der Batteriezelle (11; 110; 210; 310; 410).

12. Verfahren nach Anspruch 11, aufweisend:

Einfügen der Batteriezelle (11; 110; 210; 310; 410) in die Batteriezellenspannvorrichtung (10; 100; 200; 300; 400) und dann Messen des Gewichts der Batteriezellenspannvorrichtung (10; 100; 200; 300; 400) in der Luft;
Aufnehmen der Batteriezellenspannvorrichtung (10; 100; 200; 300; 400) in einem Wassertank (480), wo Flüssigkeit aufgenommen wurde, und dann Messen des Gewichts der Batteriezellenspannvorrichtung (10; 100; 200; 300; 400) in der Flüssigkeit; und
Berechnen einer Volumenänderungsmenge der Batteriezelle (11; 110; 210; 310; 410) durch eine folgende Formel 1:

[Formel 1]

$$V = \frac{W1 - W2}{\rho}$$

wobei V eine Volumenänderungsmenge der Batteriezelle (11; 110; 210; 310; 410) bezeichnet, W1 ein Gewicht der Batteriezellenspannvorrichtung (10; 100; 200; 300; 400) in der Luft bezeichnet, W2 ein Gewicht der Batteriezellenspannvorrichtung (10; 100; 200; 300; 400), die in der Flüssigkeit aufgenommen ist, bezeichnet und $\rho$ eine Dichte der Flüssigkeit bezeichnet.

13. Verfahren nach Anspruch 12, ferner aufweisend Laden und Entladen der Batteriezelle (11; 110; 210; 310; 410) während des Messens des Gewichts der Batteriezellenspannvorrichtung (10; 100; 200; 300; 400), die in der Flüssigkeit aufgenommen ist.

14. Verfahren nach Anspruch 12, ferner aufweisend Erwärmen der Flüssigkeit auf eine vorbestimmte Temperatur während des Messens des Gewichts der Batteriezellenspannvorrichtung (10; 100; 200; 300; 400), die in der Flüssigkeit aufgenommen ist.

15. Verfahren nach Anspruch 14, wobei das Berechnen der Volumenänderungsmenge der Batteriezelle (11; 110; 210; 310; 410) Berechnen einer Volumenänderung der Batteriezelle (11; 110; 210; 310; 410) gemäß einer Temperatur der Flüssigkeit aufweist.

**Revendications**

1. Gabarit d'élément de batterie (10; 100; 200; 300; 400) comprenant :

des première et deuxième plaques (12; 120; 220; 320; 420; 13; 130; 230; 330; 430);
un boulon (14; 140; 240; 340; 440) et un écrou (15; 150; 250; 350; 450) pour la fixation des première et deuxième plaques (12; 120; 220; 320; 420; 13; 130; 230; 330; 430) de sorte que l'élément de batterie (11; 110; 210; 310; 410) soit intercalé, en cours d'usage, entre les première et deuxième plaques (12; 120; 220; 320; 420; 13; 130; 230; 330; 430);
**caractérisé par**
un écarteur stratifié (170; 270; 370) positionné entre la première plaque (12; 120; 220; 320; 420) et la deuxième plaque (13; 130; 230; 330; 430) pour désigner une distance de séparation, et étant généré en stratifiant n écarteurs (16; 160; 260; 360) dont la structure entoure un boulon (14; 140; 240; 340; 440), n étant un entier égal ou supérieur à 2, et
chacun des écarteurs (16; 160; 260; 360) comprenant un dispositif à fente (161; 261; 361) ouvert dans une direction longitudinale de l'écarteur (16; 160; 260; 360).

2. Gabarit d'élément de batterie (10; 100; 200; 300; 400) selon la revendication 1, le dispositif à fente (161; 261; 361) de l'écarteur (16; 160; 260; 360) étant ouvert d'un côté à l'autre dans le sens longitudinal de l'écarteur stratifié (170; 270; 370).

3. Gabarit d'élément de batterie (10; 100; 200; 300; 400) selon la revendication 1, le dispositif à fente (161; 261; 361) de l'écarteur (16; 160; 260; 360) étant ouvert dans une plage allant de 10 à 70 degrés depuis un centre d'un axe.

4. Gabarit d'élément de batterie (10; 100; 200; 300; 400) selon la revendication 1, un bout de l'écarteur (16; 160; 260; 360) présentant une saillie (262) ou une partie évidée (263), dont la zone centrale a été réalisée de façon saillante ou évidée sous forme de structure à gradins, et
l'autre bout de l'écarteur (16; 160; 260; 360) présentant une saillie (262) ou une partie évidée (263) possédant une zone centrale réalisée de façon saillante ou évidée sous forme de structure à gradins.

**5.** Gabarit d'élément de batterie (10; 100; 200; 300; 400) selon la revendication 1, un bout d'un k^ème écarteur (16; 160; 260; 360) présentant une saillie (262) ou une partie évidée (263), et l'autre bout d'un (k+1)^ème écarteur (16; 160; 260; 360) présentant une partie évidée (263) ou une saillie (262) correspondant à la saillie (262) ou la partie évidée (263) du k^ème écarteur (16; 160; 260; 360), and

k étant un entier égal ou supérieur à 1 et égal ou inférieur à n-1.

**6.** Gabarit d'élément de batterie (10; 100; 200; 300; 400) selon la revendication 1, un bout de l'écarteur (16; 160; 260; 360) présentant un bossage (362) ou une cannelure (363), et

l'autre bout de l'écarteur (16; 160; 260; 360) présentant une cannelure (363) ou un bossage (362).

**7.** Gabarit d'élément de batterie (10; 100; 200; 300; 400) selon la revendication 1, un bout du k^ème écarteur (16; 160; 260; 360) présentant un bossage (362) ou une cannelure (363), et l'autre bout du (k+1)^ème écarteur (16; 160; 260; 360) présentant une cannelure (363) ou un bossage (362) correspondant au bossage (362) ou à la cannelure (363) du k^ème écarteur (16; 160; 260; 360), et

k étant un entier égal ou supérieur à 1 et égal ou inférieur à n-1.

**8.** Gabarit d'élément de batterie (10; 100; 200; 300; 400) selon la revendication 1, le gabarit d'élément de batterie (10; 100; 200; 300; 400) comprenant de 4 à 12 boulons (14; 140; 240; 340; 440) et écrous (15; 150; 250; 350; 450), respectivement, et l'écarteur (16; 160; 260; 360) étant fixé par au moins un boulon (14; 140; 240; 340; 440).

**9.** Appareil de mesure d'un volume d'un élément de batterie, l'appareil comprenant :

le gabarit d'élément de batterie (10; 100; 200; 300; 400) selon la revendication 1;
un réservoir d'eau dans lequel est contenu le liquide ; et
une balance mesurant un poids du gabarit d'élément de batterie (10; 100; 200; 300; 400), où l'élément de batterie (11; 110; 210; 310; 410) a été placé, sur un côté externe du réservoir d'eau (480) et sur un côté interne du réservoir d'eau (480), respectivement.

**10.** Appareil de mesure selon la revendication 9, comprenant en outre un dispositif de charge et de décharge (490) connecté électriquement, en cours d'usage, à l'élément de batterie (11; 110; 210; 310; 410).

**11.** Procédé de mesure d'un volume d'un élément de batterie (11; 110; 210; 310; 410) comportant l'intercalage d'un élément de batterie (11; 110; 210; 310; 410) dans le gabarit d'élément de batterie (10; 100; 200; 300; 400) selon la revendication 1, puis en mesurant des poids avant et après, respectivement, un changement de volume de l'élément de batterie (11; 110; 210; 310; 410).

**12.** Procédé selon la revendication 11, comprenant :

l'intercalage de l'élément de batterie (11; 110; 210; 310; 410) dans le gabarit d'élément de batterie (10; 100; 200; 300; 400), puis en mesurant le poids du gabarit d'élément de batterie (10; 100; 200; 300; 400) dans l'air ;
le placement du gabarit d'élément de batterie (10; 100; 200; 300; 400) dans un réservoir d'eau (480) où l'on a placé le liquide, et en mesurant ensuite le poids du gabarit d'élément de batterie (10; 100; 200; 300; 400) dans le liquide ; et
le calcul d'un degré de changement de volume de l'élément de batterie (11; 110; 210; 310; 410) à l'aide de la formule 1 suivante :

[Formule 1]

$$V = \frac{W1 - W2}{\rho},$$

V désignant un degré de changement de volume de l'élément de batterie (11; 110; 210; 310; 410), W1 désignant un poids du gabarit d'élément de batterie (10; 100; 200; 300; 400) dans l'air, W2 désignant un poids du gabarit d'élément de batterie (10; 100; 200; 300; 400) placé dans le liquide, et ρ désignant une densité du liquide.

**13.** Procédé selon la revendication 12, comprenant en outre la charge et la décharge de l'élément de batterie (11; 110; 210; 310; 410) au cours de la mesure du poids du gabarit d'élément de batterie (10; 100; 200; 300; 400) placé dans le liquide.

**14.** Procédé selon la revendication 12, comprenant en outre le chauffage du liquide à une température prédéterminée au cours de la mesure du poids du gabarit d'élément de batterie (10; 100; 200; 300; 400) placé dans le liquide.

**15.** Procédé selon la revendication 14, le calcul du degré de changement de volume de l'élément de batterie (11; 110; 210; 310; 410) comprenant le calcul d'un changement de volume de l'élément de batterie (11; 110; 210; 310; 410) en fonction d'une température du liquide.

【FIG. 1】

【FIG. 2】

10

15

14

11

12

16

13

【FIG. 3】

【FIG. 4】

【FIG. 5】

【FIG. 6】

【FIG. 7】

【FIG. 8】

【FIG. 9】

【FIG. 10】

【FIG. 11】

【FIG. 12】

```
                        ┌─────────────┐
                        │    Start    │
                        └──────┬──────┘
                               │              ⌐ S10
                               ▼
     ┌─────────────────────────────────────────────────┐
     │ Interposing battery cell in battery cell jig and │
     │  then measuring weight of battery cell jig in    │
     │              space outside water tank            │
     └─────────────────────────┬───────────────────────┘
                               │              ⌐ S20
                               ▼
     ┌─────────────────────────────────────────────────┐
     │   Accommodating battery cell jig in water tank   │
     │  where liquid has been accommodated, and then    │
     │    measuring weight of battery cell jig in liquid │
     └─────────────────────────┬───────────────────────┘
                               │              ⌐ S30
                               ▼
     ┌─────────────────────────────────────────────────┐
     │   Calculating volume change amount of battery    │
     │           cell by following formula 1:           │
     │           [Formula 1] V=(W1-W2)/ρ                │
     │   (V denotes volume change amount of battery     │
     │  cell, W1 denotes weight of battery cell jig in the│
     │     air, W2 denotes weight of battery cell jig   │
     │  accommodated in liquid, and ρ denotes density  │
     │                   of liquid)                     │
     └─────────────────────────┬───────────────────────┘
                               │
                               ▼
                        ┌─────────────┐
                        │     End     │
                        └─────────────┘
```

**REFERENCES CITED IN THE DESCRIPTION**

**Patent documents cited in the description**

- KR 1020200143327
- KR 100922571 B1
- CN 111504414 A
- KR 102070684 B1